Europäisches Patentamt

European Patent Office

Office européen des brevets

(19)

(11) Veröffentlichungsnummer: **0 009 571**
**B1**

(12) **EUROPÄISCHE PATENTSCHRIFT**

(45) Veröffentlichungstag der Patentschrift: **30.06.82**

(51) Int. Cl.³: **F 24 J 3/02**

(21) Anmeldenummer: **79102844.2**

(22) Anmeldetag: **07.08.79**

(54) **Solar-Energiekollektor mit Linsenraster und Verfahren zu seiner Herstellung.**

(30) Priorität: **29.09.78 DE 2842400**

(43) Veröffentlichungstag der Anmeldung:
**16.04.80 Patentblatt 80/8**

(45) Bekanntmachung des Hinweises auf die Patenterteilung:
**30.06.82 Patentblatt 82/26**

(84) Benannte Vertragsstaaten:
**DE FR GB**

(56) Entgegenhaltungen:
**AU - A - 492 074**
**DE - A - 2 554 243**
**FR - A - 2 407 442**
**US - A - 2 888 007**
**US - A - 3 982 527**

(73) Patentinhaber: **International Business Machines Corporation**
**Armonk, N.Y. 10504 (US)**

(72) Erfinder: **Bohg, Armin**
**Mozartstrasse 13**
**D-7031 Neuweiler (DE)**
Erfinder: **Briska, Marian**
**Nürtinger Strasse 51**
**D-7030 Böblingen (DE)**

(74) Vertreter: **Busch, Robert, Dipl.-Ing.**
**Schönaicher Strasse 220**
**D-7030 Böblingen (DE)**

Courier Press, Leamington Spa, England.

## Solar-Energiekollektor mit Linsenraster und Verfahren zu seiner Herstellung

Die Erfindung betrifft eine Anordnung, wie sie dem Oberbegriff des Patentanspruchs 1 zu entnehmen ist.

Zur Wirkungsgradsteigerung bei Solarenenergiekollektoren sind grundsätzlich zwei Forderungen zu erfüllen, nämlich einmal dafür Sorge zu tragen, daß möglichst die gesamte eingefangene Strahlung verwendet wird, indem Strahlungsreflektion ausgeschlossen wird und daß die Strahlungsausnutzung unabhängig vom Sonnenstand gehalten wird. Zur Erfüllung der ersten Forderung liegen viele Lösungsbeispiele vor. So zeigt z.B. die Anordnung nach der Veröffentlichung "Solar Energie Collector" in "IBM Technical Disclosure Bulletin" Bd. 19, Nr. 7, Dez. 1976, auf den Seiten 2581 und 2582 einen Solarenergiekollektor, der für senkrecht hierzu einfallende Strahlung zumindest nahezu als schwarzer Körper wirkt. Mit Hilfe eines Linsenrasters wird hier die eingefangene Sonnenstrahlung auf die Blendenöffnungen in einem dem Linsenraster zugeordneten Blendenraster fokussiert, dessen rückwärtige Seite reflektierend ausgebildet ist. Die durch diese Blendenöffnungen auf den Absorber gelangende Strahlung wird nach Streuung hieran durch diese reflektierende Schicht wieder auf den Absorber zurückgeworfen. Bei senkrechtem Strahlungseinfall wird zwar praktisch alle Energie absorbiert, jedoch wird bei mehr oder weniger großer Winkelabweichung des Sonnenstandes ein derartiger Solarenergiekollektor unwirksam, da dann die Brennpunkte außerhalb der Blendenöffnungen des Blendenrasters zu liegen kommen. Um diesem Nachteil beizukommen, müßte also ein derartiger Solarenergiekollektor dem Sonnenstand nachgeführt werden.

Dies bildet aber nicht den einzigen Nachteil eines derartigen Solarenergiekollektors. Wenn z.B. Linsenraster und Blendenraster, wie es meistens der Fall ist, aus verschiedenem Material bestehen, können durch deren unterschiedliche Ausdehnungskoeffizienten und sonstigen umgebungsempfindlichen Eigenschaften Deckungsfehler zwischen beiden Rasteranordnungen auftreten, die zu störenden Dezentrierungen Anlaß geben. Um derartige Störungen auszuschalten, ist ein gewisser Aufwand erforderlich wie z.B. in der deutschen Offenlegungsschrift 26 49 886 beschrieben, der darin besteht, daß die einzelnen Linsen des Linsenrasters aus Einzelbauelementen bereitgestellt werden, die dann zusätzlich die jeweils zugeordnete Blendenöffnung enthalten.

Es ist andererseits ein Solarenergiekollektor aus der deutschen Offenlegungsschrift 26 31 412 bekannt geworden, bei dem es nicht erforderlich ist, eine Nachführung des gesamten Solarenergiekollektors vorzusehen, vielmehr sind hier mechanische Steuerungsmaßnahmen getroffen, die die Linsen in Abhängigkeit vom Sonnenstand einzustellen gestatten. Auch hier ist aber nicht von einer automatischen Nachführung mit dem Sonnenstand die Rede, sondern die Einstellung muß manuell erfolgen oder, wie in der deutschen Offenlegungsschrift 25 11 740 ausgeführt, mit Hilfe einer Zeitsteuerung vorgenommen werden, um für ungefähre Einhaltung der Sollstellung der Strahlungseinfangelemente Sorge zu tragen wobei dann eine übergeordnete, direkt von der Sonnenstrahlung gelenkte Steuerung die genaue Einstellung der Winkellage übernehmen kann.

Zusammenfassend läßt sich demnach sagen, daß ein idealer Solarenergiekollektor eine automatische Sonnenstandsnachführung nicht zuletzt auch wegen der jahreszeitlichen Angleichung besitzen sollte und daß, wie in der deutschen Offenlegungsschrift 25 45 224 ausgeführt, selektiv reflektierende Schichten dem Absorber derart zugeordnet sind, daß die Sonnenstrahlung ausreichend gut absorbiert wird und langwelliges Infrarot hingegen höchstens nur geringfügig emittiert wird. Allen diesen Anforderungen gleichzeitig werden jedoch oben angeführte Anordnungen nicht gerecht, da hauptsächlich die Nachführung zum vom jeweiligen Sonnenstand unabhängigen Strahlungseinfang einmal komplizierte Steuerungsmechanismen erfordert und zum anderen nur bedingt automatisch durchzuführen ist.

Die Aufgabe der Erfindung besteht demnach darin, einen für die praktische Anwendung ausreichend den jeweiligen Sonnenstand automatisch nachführbaren Solarenergiekollektor bereitzustellen, der zudem praktisch als schwarzer Körper wirkt.

Erfindungsgemäß wird diese Aufgabe gelöst wie es dem Kennzeichen des Patentanspruchs 1 zu entnehmen ist.

Es sind mehrere Möglichkeiten denkbar, um in einer auf der rückwärtigen Seite reflektierenden Schicht aufgrund der Fokussierungsenergie freie Lichtpassagen zu schaffen. Eine gemäß der Erfindung bevorzugte Anordnung sieht hierzu vor, daß die Strahlungspassagen in einem aus einzelnen, bei hierauf fokussierter Strahlung abbiegbaren Bimetallschuppen zusammengesetzten, in der Brennebene liegenden Schuppenbelag, der auf der rückwärtigen Seite strahlungsreflektierend ausgebildet ist, freigebbar sind. Ein in der Brennebene von lichtfokussierenden Bauelementen liegender und auf einem dielektrischen Substrat angebrachter Metallschuppenbelag ist an sich aus "IBM Technical Disclosure Bulletin" Bd. 13, Nr. 3. August 1970, Seiten 603 und 604 bekannt. Jedoch sind hierbei im Gegensatz zur Erfindung die Metallschuppen unter Einfluß von Coulombkräften abhebbar, so daß hierauf fokussiertes Licht in Abhängigkeit davon, ob die jeweilige Metallschuppe abgehoben ist oder nicht, jeweils unter anderem Winkel reflektiert wird.

Da diese Bimetallschuppen ohne weiteres im Kleinstformat ausgebildet werden können, lassen sich gemäß einer vorteilhaften Weiterbildung der Erfindung die Abmessungen der Bimetallschuppen so wählen, daß jeder Linse des Linsenrasters größenordnungsmäßig 100 Bimetallschuppen zugeordnet sind.

Zur Vereinfachung der Herstellung dürfte es zweckmäßig sein, den Schuppenbelag auf einem Substrat vorzusehen, das andererseits die Linsenrasterplatte bildet, wobei vorteilhafterweise Brechzahl und Linsenradius zur Bereitstellung der gewünschten Brennebene aufeinander abgestimmt sind.

Um ein unnötiges Aufheizen des Bimetallschuppenbelags bei Betrieb auszuschalten kann es andererseits auch aus konstruktiven Gründen durchaus vorteilhaft sein, einen Zwischenraum zwischen Substrat und Linsenraster vorzusehen, um hierdurch ein Kühlmedium zu leiten, das entweder ein Gas oder eine andere Flüssigkeit sein kann, je nachdem wie der Solarkollektor betrieben werden soll. In diesem Falle sollten aber auch die Brechzahlen von Substrat, Linsenrasterplatte und Kühlmedium möglichst übereinstimmen.

Gemäß einem weiteren Erfindungsgedanken enthält der Bimetallschuppenbelag als Bimetallschuppen jeweils relativ kurze Kupferlamellen und relativ lange Aluminiumlamellen, die an mehreren auf einer Glasplatte als Substrat aufgedampften Aluminiumstreifen mittels Schweißung oder Hartlötung angebracht sind.

Zur Herstellung eines Solarenergiekollektors nach der Erfindung läßt sich ein Verfahren anwenden wie es für andere Zwecke in "IBM Technical Disclosure Bulletin" Bd. 15, Nr. 10, März 1973 auf Seite 3024 angegeben ist. Demgemäß werden die auf ein Glassubstrat aufzubringenden Bimetallschuppen zunächst auf einer beigsamen Kunststoffplatte aufgedampft, um darüber an den endgültig mit den im Glassubstrat vorgesehenen Befestigungsstellen Aluminiumstreifen aufzudampfen und zwar mit Hilfe üblicher Maskenverfahren. Gleicherweise angeordnete Aluminiumstreifen werden auf einem Glassubstrat aufgedampft. Beide Aluminiumstreifengruppen sind an ihren Enden mit Aluminiumquerstreifen verbunden, die beim Übereinanderlegen der Kunststoffunterlage mit dem Glassubstrat derart, daß die Aluminiumstreifen übereinander zu liegen kommen, voneinander isoliert als Stromanschlußstellen zum anschließenden Verschweißen der aufeinanderliegenden Aluminiumstreifen unter gleichzeitigem Aufeinanderpressen miteinander dienen. Dieses Elektroschweißen erfolgt also unter Druckeinwirkung, indem z.B. eine Rolle quer zu den Aluminiumstreifen über die Kunststoffunterlage geführt wird, so daß die Streifen Punkt für Punkt miteinander verschweißt werden. Anschließend wird dann die Kunststoffunterlage mit Hilfe einer organischen Lösung abgetragen.

Das erfindungsgemäße Verfahren läßt sich auch so abwandeln, daß vor Abziehen der Kunststoffunterlage die Aluminiumstreifen der Kunststoffunterlage mit denen des Glassubstrats mit Hilfe eines Laserstrahlschweißverfahrens miteinander verschweißt werden, und zwar so, wie es für einen anderen Zweck in der deutschen Offenlegungsschrift 21 39 850 beschrieben ist.

Die Erfindung wird anschließend anhand einer Ausführungsbeispielsbeschreibung mit Hilfe der unten aufgeführten Zeichnungen näher erläutert. Es zeigen:

Fig. 1 einen nicht maßstäblichen Ausschnitt eines Querschnitts durch einen erfindungsgemäß aufgebauten Solarenergiekollektor,

Fig. 2 den Ausschnitt einer Draufsicht auf einen Solarenergiekollektor gemäß der Erfindung,

Fig. 3 einen vergrößerten Ausschnitt aus einem Querschnitt eines Solarenergiekollektors gemäß der Erfindung mit angedeuteter Strahlfokussierung zum Abbiegen einer Bimetallschuppe,

Fign. 4 bis 8 Querschnittsdarstellungen jeweils im Ausschnitt zur Erläuterung des erfindungsgemäßen Herstellungsverfahrens eines Solarenergiekollektors,

Fig. 9 ein stark vergrößerter, nicht maßstäblicher Ausschnitt aus dem erfindungsgemäßen Teil eines Solarenergiekollektors,

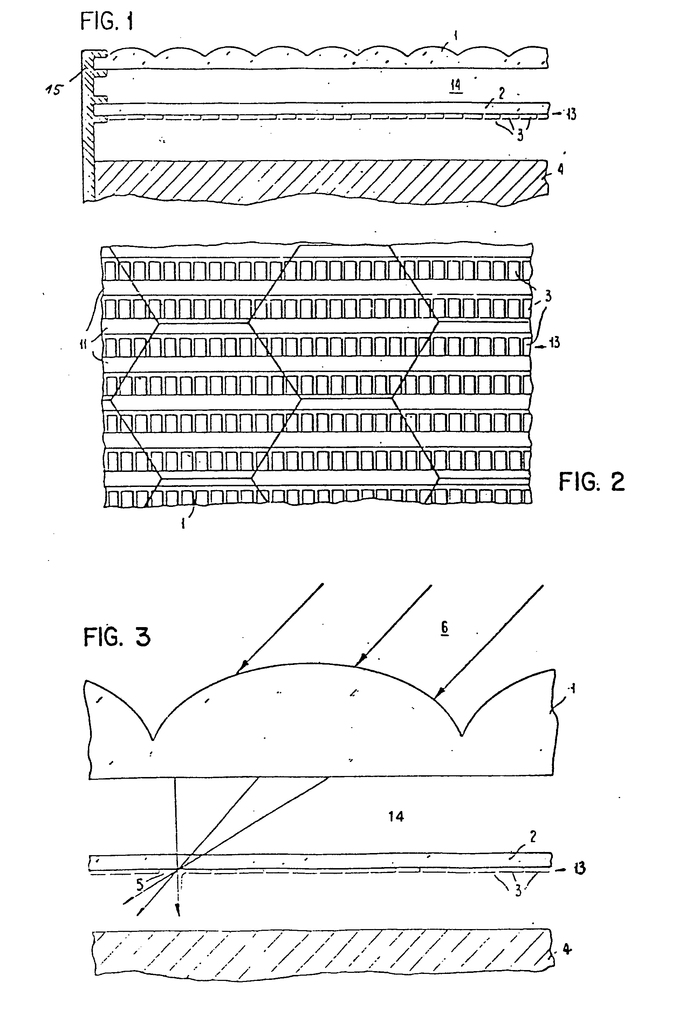

Die in Fig. 1 schematisch ausschnittsweise dargestellte erfindungsgemäße Anordnung zeigt in nicht maßstäblicher Ausführung einen Solarenergiekollektor, enthaltend eine Linsenrasterplatte 1, in deren Brennebene ein Bimetallschuppenbelag 13 liegt, der in einem vorgegebenen Abstand zum Absorber 4 angeordnet ist. Am Rand werden die einzelnen Bauelemente wie in Fig. 1 angedeutet durch den Rahmen 15 wie an sich bekannt, gehalten. Zusätzlich zum Rahmen 15 können außerdem noch Stützen in der Mitte vorgesehen werden, falls die vorgesehene Ausdehnung des Solarenergiekollektors dies erforderlich machen sollte. Der Bimetallschuppenbelag 13 besteht aus den einzelnen Bimetallschuppen 3, die an ihren einen Endseiten über längs hierzu verlaufenden Aluminiumstreifen 10, 11, am Substrat 2 fest angebracht sind. Das Substrat 2 kann allerdings auch mit der Linsenrasterplatte 1 eine Einheit bilden, wobei dann Brechzahl sowie Abstand des Linsenrasters zum Schuppenbelag 13 derart gewählt sind, daß die Fokussierungsbedingungen des in der Brennebene liegenden Bimetallschuppenbelags 13 eingehalten werden. Der Abstand des Bimetallschuppenbelags 13 zum Absorber 4, wobei die dem Absorber 4 zugewandte Oberfläche des Bimetallschuppenbelags 13 total reflektierend ausgebildet ist, ist zwar nicht kritisch, aber so gewählt, daß nicht durch Wärmeleitung eine nennenswerte Erwärmung des Bimetallschuppenbelags 13 zusammen mit dem Substrat 2 zu verzeichnen ist. Es versteht sich, daß auch die Innenflächen des Rahmens 15 strahlungsreflektierend ausgebildet sind. Während der Raum zwischen Absorber 4 und Bimetallschuppenbelag 13 vorzugsweise luftdicht verschlossen sein sollte, kann es durchaus zweckmäßig sein, den Zwischenraum 14 zwischen Bimetallschuppenbelag 13 und Linsenrasterplatte 1 für einen Gasstrom, z.B. aus Luft, zur Kühlung offen zu halten, oder von einer Kühlflüssigkeit durchströmen zu lassen. Zur Vermeidung von Reflexionsverlusten sollte ein derartiges Kühlmedium die gleiche Brechzahl wie die Linsenrasterplatte 1 und das Substrat 2 aufweisen. Derartige Maßnahmen sind insbesondere vorteilhaft, wenn ein zu starkes Aufheizen des Bimetallschuppenbelags zu befürchten ist, wie z.B. bei Einsatz in heißen Zonen. Es könnte dann nämlich ein unbeabsichtigtes Abheben nicht betroffener Bimetallschuppen eintreten.

Im Draufsichtsausschnitt nach Fig. 2, läßt sich das Hexagonalmuster des Linsenrasters deutlich erkennen und zwar ebenso wie der Bimetallschuppenbelag 13 mit den Aluminiumstreifen 11, die zur Befestigung der Bimetallschuppen 3 auf dem hier nicht erkennbaren Substrat 2 dienen. Aus dieser ebenfalls nicht maßstäblichen Zeichnung läßt sich jedenfalls ersehen, daß eine Vielzahl von Bimetallschuppen je einer Linse der Linsenrasterplatte 1 zugeordnet ist. In der Praxis sind je einer Linse größenordnungsmäßig 100 Bimetallschuppen 3 zugeordnet. Die Bimetallschuppen 3 selbst bestehen aus etwa 2 mm langen und 0,5 mm breiten auf den Aluminiumstreifen 11 direkt befestigten Aluminiumschichten, auf die gleichbreite, jedoch 0,5 mm lange Kupferschichten aufgetragen sind, so daß sich entsprechend befestigte Bimetallschuppen 3 ergeben. Die Bimetallschuppen 3 sind im Verband des Bimetallschuppenbelags 13 möglichst eng aneinanderliegend so angebracht, daß sich die freien Enden der Bimetallschuppen 3 ohne gegenseitige Störung unter Strahlungseinwirkung abheben lassen. Andererseits jedoch sind die gegenseitigen Schuppenabstände so klein, daß keine nennenswerte Reflektionseinbuße für die vom Absorber 4 rückgestreute Strahlung zu verzeichnen ist, so daß also hiermit praktisch eine homogene Reflektionsfläche vom Bimetallschuppenbelag 13 bereitgestellt wird.

Die Linsen der Linsenrasterplatte 1 mit einem jeweiligen Durchmesser von etwa 20 cm, sind bezüglich ihrer oben genannten Eigenschaften so gewählt, daß die jeweilige Sonnenabbildung im Fokus etwa 2 mm Durchmesser aufweist. Die Linsen selbst könnten auch als Fresnelsche Stufenlinsen ausgebildet sein.

Der Absorber 4 besteht in an sich bekannter Weise aus einem matten geschwärzten Körper, durch den wasserdurchlaufene Rohre gezogen sind. Andere Ausführungen des Absorbers 4 lassen sich natürlich ebensogut verwenden, wie auch andere Wärmetransportmedien als Wasser.

Zum Betrieb des erfindungsgemäßen Solarenergiekollektors wird dieser derart zum höchsten Sonnenstand ausgerichtet, daß ein möglichst großer Winkelbereich der einfallenden Strahlung erfaßt wird. Jedenfalls liegt der erfaßbare Winkelbereich bei entsprechender Ausrichtung des erfindungsgemäßen Solarenergiekollektors senkrecht zum höchsten Sonnenstand zwischen 90° und 180°, so daß für die Praxis eine Sonnenstandsnachführung überflüssig wird. Die interessanten Sonnenstände liegen zwischen maximal 8 und 16 Uhr Ortszeit im Sommer, so daß der zu erfassende Winkelbereich mit etwa 120° anzusetzen wäre, was für die Anwendung der erfindungsgemäßen Anordnung demnach ohne weiteres zu erreichen ist.

Anhand der Fig. 3 läßt sich die Betriebsweise des erfindungsgemäßen Solarenergiekollektors leicht erkennen. Bekanntlich ist die Lage des Brennpunktes einer Linse vom Einfallswinkel der hierauf gerichteten Strahlung 6 abhängig; d.h. der Fokus verlagert sich in der Brennebene dieser Linse. Wird nun wie gemäß der Erfindung in dieser Brennebene ein Bimetallschuppenbelag 13 angeordnet, dann reicht die im jeweiligen Brennpunkt durch die einfallende Strahlung 6 hervorgerufene Wärme völlig aus, die jeweilige Bimetallschuppe 3 so vom Substrat 2 abzuheben, daß eine Lichtpassage 5 auf den Absorber 4 freigegeben wird. Wandert nun die einfallende Strahlung 6 in Abhängigkeit vom Sonnenstand, dann ist dank der Erfindung gewährleistet, daß am jeweils entsprechenden Brennpunkt eine Strahlungspassage 5 freigegeben wird. Es ist zwar ein gewisser Winkelbereich für den freien Strahlungsdurchgang bei vom Substrat 2 abgehobener Bimetallschuppe 3 gesperrt, jedoch läßt sich die Bimetallcharakteristik so wählen, daß der jeweilige Bimetallstreifen derart stark abbiegbar ist, daß der für den Strahlungsdurchgang unwirksame Winkelbereich sich auf ein Minimum mit etwa 30° halten läßt.

Wichtig für die Funktion des erfindungsgemäßen Solarenergiekollektors ist, wie gesagt, daß der Raum zwischen Bimetallschuppenbelag 13 und Absorber 4 luftdicht verschlossen ist, was durch geeignete Gestaltung des Rahmens 15 in Fig. 1 gewährleistet ist. Für viele Anwendungszwecke kann es, wie bereits gesagt, durchaus zweckmäßig sein, den Raum zwischen dem den Bimetallschuppenbelag 13 tragenden Substrat 2 und der Linsenrasterplatte 1 für eine zur Kühlung dienendes Medium freizuhalten. Fernerhin lassen sich durch geeignete Herstellungsverfahren, insbesondere durch Aufbringen der Bimetallschuppen 3 bei erhöhter Temperatur, deren Eigenschaften so einstellen, daß sich diese Bimetallschuppen 3 in vorteilhafter Weise erst bei einer Schwellentemperatur von z.B. 100°C öffnen können.

Zur Ermittlung der Freigabe der Strahlungspassagen 5 bei maximaler Abhebung der Bimetallschuppen 3, dürfte die Berechnung des zu erzielenden Krümmungsradius interessant sein.

Bekanntlich gilt für maximale Krümmung eines Bimetallstreifens folgende Beziehung:

$$s_1/s_2 = \sqrt{E_2}/\sqrt{E_1}$$

hierin bedeuten:

$s_1$ und $s_2$ jeweils die Schichtdicken der einzelnen Metalle
$E_1$ und $E_2$ die betreffenden Elastizitätsmoduln.

Ist die sich aus der gezeigten Beziehung ergebende Bedingung erfüllt, dann gilt für den Krümmungsradius des Bimetallstreifens folgende Gleichung:

$$r = 2\,(s_1+s_2)/3(\alpha_1+\alpha_2)\Delta T$$

hierin bedeuten:

$\alpha_1$, $\alpha_2$ die linearen thermischen Ausdehnungskoeffizienten $\Delta T$ die Temperaturdifferenz.

Werden für die erfindungsgemäße Anwendung ein 1,3 $\mu$m dicker Aluminiumteil und ein 1,0 $\mu$m dicker Kupferteil des Bimetallstreifens vorausgesetzt, dann ergibt sich für die Summe $s_1+s_2$ ein Wert von 2,3 $\mu$m und beim Einsetzen für $s_1$, die Schichtdicke von Aluminium, und demgemäß für $s_2$, die Schichtdicke von Kupfer, ein Quotient von 1,3, der außerdem der Wurzel aus dem Quotienten der Elastizitätsmoduln von Kupfer zu Aluminium entspricht.

Darüber hinaus gilt für die Differenz der linearen thermischen Ausdehnungskoeffizienten:

$$\alpha_1-\alpha_2 = (24-16)10^{-6}/°C$$

Wird im Brennpunkt einer jeweiligen Linse der Linsenrasterplatte 1 eine Mindesttemperatur von 320°C vorausgesetzt, dann ergibt sich:

$$\Delta T = 320°C - 20°C = 300°C$$

Werden die obenstehenden Werte in die angegebene Gleichung für den minimalen Krümmungsradius einer Bimetallschuppe 3 eingesetzt, dann ist:

$$r = 2 \cdot 2,3/3 \cdot 10^{-6} \cdot 300 = 4,6 \cdot 10^2 \mu m = 0,46 \text{ mm}.$$

Ein derartiger Krümmungsradius ist bei einer Schuppenlänge von 1 mm völlig ausreichend einen Solarenergiekollektor ohne Sonnenstandsnachführung für den praktischen Gebrauch im genannten Winkelbereich bereitzustellen.

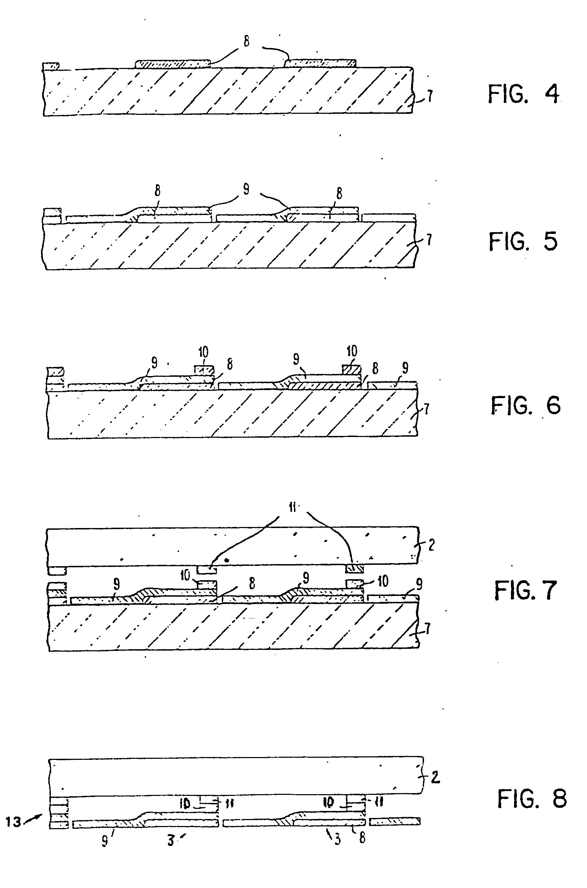

Es sind verschiedene Möglichkeiten denkbar, einen Solarenergiekollektor gemäß der Erfindung herzustellen. Anhand der Abbildungen in Fig. 4 bis Fig. 8 soll jedoch ein besonders vorteilhaftes Herstellungsverfahren im Ablauf der einzelnen Verfahrensschritte erläutert werden. Hierzu wird zunächst gemäß der Abbildung in Fig. 4 auf eine biegsame Kunststoffunterlage 7 ein regelmäßiges Muster, bestehend aus 0,5 mm breiten und 1,3 $\mu$m dicken sowie 0,5 mm langen Kupferschichten mit Hilfe bekannter Verfahren über eine Siebmaske aufgedampft. Diese Kupferschichten besitzen in ihrer Längserstreckung einen gegenseitigen Abstand von etwa 1,5 mm und in ihrer Breitenerstreckung einen Abstand in der Größenordnung von 10 $\mu$m, wie er später dem gegenseitigen Abstand der Bimetallschuppen 3 zueinander entspricht. Die so bedampfte Kunststoffunterlage 7 enthält dann an ihrer Oberfläche angebrachte 0,5 mm breite Kupferstreifen, die sich aus einzelnen eng benachbarten Kupferschichten der jeweiligen Abmessung von 0,5 mm. 0,5 mm mit einem gegenseitigen Abstand von etwa 1,5 mm zusammensetzen.

Mit einer entsprechenden Siebmaske werden dann über diese Kupferschichten 8 Aluminiumschicten 9 aufgedampft (Fig. 5) und zwar so, daß jeweils die Kupferschichten 8 überdeckt werden, indem die drei betreffenden Ränder beider Schichten 8, 9 miteinander bündig abschließen. Die gegenseitigen Abstände der einzelnen Aluminiumschichten, die mit einer Dicke von etwa 1 $\mu$m aufgedampft sind, entsprechen den Bimetallschuppenabständen des Bimetallschuppenbelags 13. D.h. die Aluminiumschichten besitzen ebenfalls eine Breite von 0,5 mm, jedoch eine Länge von 2 mm. Gemäß Fig. 6 werden dann noch 20 $\mu$m dicke und 0,2 mm breite kontinuierlich durchlaufende Aluminiumstreifen 10 auf die dicken Enden der vorgesehenen Bimetallschuppen 3 aufgedampft und zwar so, daß die Seitenkanten der Aluminiumstreifen 10 mit den Breitseiten der Bimetallschuppen 3 bündig abschließen. Damit ergibt sich eine mit den Bimetallschuppen 3, bestehend aus den Kupferschichten 8 und den Aluminiumschichten 9 als Bimetallschuppenbelage 13 überzogene Kunststoffunterlage 7, die außerdem noch quer zur Längserstreckung der Bimetallschuppen 3 die kontinuierlich verlaufenden Aluminiumstreifen 10 trägt.

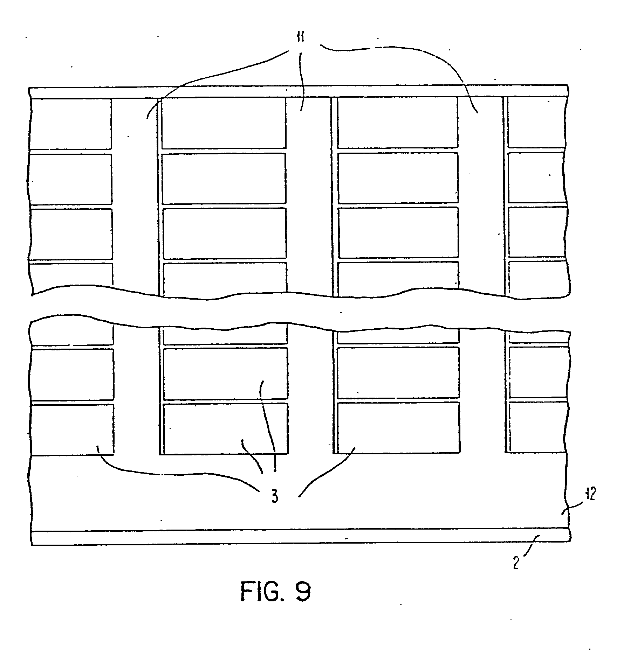

In einem gesonderten Verfahrensschritt werden auf eine als Substrat 2 dienende Glasplatte bzw. auf der Rückseite einer entsprechend ausgebildeten Linsenrasterplatte 1 ebenfalls kontinuierlich verlaufende Aluminiumstreifen 11 aufgedampft, die, wie aus Fig. 7 ersichtlich, den gleichen Abstand zueinander aufweisen, wie die Aluminiumstreifen 10 in der Querschnittsdarstellung nach Fig. 6. Wie fernerhin aus Fig. 9 ersichtlich, sind diese Aluminiumstreifen 11 auf dem Substrat 2 an einem Ende mit einem Aluminiumquerstreifen 12 versehen, so daß sie untereinander elektrisch leitend verbunden sind. Dasselbe gilt für die sich auf der Kunststoffunterlage 7 befindenden Aluminiumstreifen 10, die ebenfalls über einen, allerdings hier nicht sichtbaren Querstreifen elektrisch-leitend miteinander in Verbindung stehen. Gemäß der Darstellung in Fig. 7 werden beide Baueinheiten anschließend so übereinandergelegt, daß sich die Aluminiumstreifen 10 und 11 einander kongruent überdecken, indem entsprechende Ausrichtungsmaßnahmen angewendet werden. Während die Aluminiumstreifen 10 und 11 hierbei miteinander in Kontakt kommen, ist gleichzeitig dafür Sorge getragen, daß der Querstreifen 12 auf Substrat 2 und der entsprechende Querstreifen auf der Kunststoffunterlage 7 isoliert voneinander zu liegen kommen.

Beide Querstreifen werden an eine geeignete Stromquelle angeschlossen, so daß sich unter schrittweisem Aneinanderpressen die Aluminiumstreifen 10 und 11 im Bereich der Bimetallschuppen 3 miteinander verschweißen lassen. Das Aufeinanderpreßen beider Aluminiumstreifen erfolgt am einfachsten durch Druckanwendung mittels einer quer zu den Aluminiumstreifen 10 und 11 über die Kunststoffunterlage 7 geführten Anpreßrolle. Die Kunststoffunterlage 7 wird anschließend mittels eines organischen Lösungsmittels von den Bimetallschuppen 3 abgelöst, so daß sich, wie in Fig. 8 gezeigt, ein Substrat 2 mit darauf angebrachtem Bimetallschuppenbelag 13, bestehend aus den einzelnen Bimetallschuppen 3, ergibt.

Eine andere Möglichkeit zur Verschweißung beider Aluminiumstreifen 10 und 11 miteinander besteht darin, vor Ablösen der Kunststoffunterlage 7 ein impulsgesteuertes Laserpunktschweißverfahren anzuwenden, das unter weitgehender Auschaltung schädlicher Auswirkungen und minimaler Energieeinwirkung und ohne die Aluminiumstreifen zu hohen Temperaturen aussetzen zu müssen, einwandfreie Schweißstellen gewährleistet. Hierzu können handelsübliche Laserschweißanlagen dienen.

Das so hergestellte Substrat 2 mit aufgebrachtem Bimetallschuppenbelag 13, kann dann anschließend wie in Fig. 1 angedeutet, mit einem Absorber 4 und einer Linsenrasterplatte 1 zu einem vorteilhaft arbeitenden Solarenergiekollektor zusammengesetzt werden.

Ganz allgemein läßt sich zur erfindungsgemäßen Anordnung noch ausführen, daß die Größe der Linsen in der Linsenrasterplatte 1 so gewählt werden sollte, daß vorteilhafterweise deren Brennpunkte nicht kleiner sind als die jeweiligen Bimetallschuppen 3. Als äußerst vorteilhaftes Ergebnis für einen Solarenergiekollektor, der gemäß der Erfindung aufgebaut ist, ergibt sich demnach, daß ein Nachführen von Linsen aus strahlungsfokussierenden Bauelementen nach dem jeweiligen Sonnenstand bei praktischen Anwendungsfällen überhaupt nicht erforderlich ist, wobei sich Verluste durch Rückstrahlung im infraroten Bereich, die ja bekanntlich mit der vierten Potenz der absoluten Temperatur steigen, auf einem absoluten Minimum halten lassen.

## Patentansprüch

1. Solarenergiekollektor mit einer durch ein Linsenraster (1) gebildeten Lichteinfangfläche, um von außen auf den Solarenergiekollektor einfallende Sonnenstrahlung mittels der Linsen auf Strahlungspassagen (5) in einem in der Brennpunktebene gelegenen Belag mit auf seiner Rückseite strahlungsreflektierender Oberfläche zu fokussieren, so daß der Solarkollektor als mindestens nahezu schwarzer Körper wirkt, indem praktisch die gesamte einfallende Strahlung auf den Absorber gelangt, dadurch gekennzeichnet, daß die Strahlungspassagen (5) nur durch beim Fokussieren der einfallenden Sonnenstrahlung (6) örtlich lokalisiert wirksam werdende Energie freigebbar sind, nämlich in einem aus einzelnen, bei hierauf fokussierter Strahlung (6) abbiegbaren Bimetallschuppen (3) zusammengesetzten, in der Brennpunktebene liegenden Schuppenbelag (13).

2. Anordnung nach Anspruch 1, dadurch gekennzeichnet, daß die Abmessungen der Bimetallschuppen (3) so gewählt sind, daß jeder Linse im Linsenraster (1) größenordnungsmäßig 100 Bimetallschuppen (3) zugeordnet sind.

3. Anordnung nach Anspruch 1 oder 2, dadurch gekennzeichnet, daß das Substrat (2) des Schuppenbelags (13) und das Linsenraster (1) eine Einheit bilden, deren Brechzahl auf den Linsenradius im Linsenraster (1) abgestimmt ist.

4. Anordnung nach Anspruch 1 oder 2, dadurch gekennzeichnet, daß ein zwischen Linsenraster (1) und Substrat (2) gebildeter Zwischenraum (14) von einem strahlungsdurchlässigen Kühlmedium durchströmt ist, dessen Brechzahl mindestens nahezu mit der des Substrats (2) und der Linsenrasterplatte (1) übereinstimmt.

5. Anordnung nach Anspruch 2 oder 3, dadurch gekennzeichnet, daß der Bimetallschuppenbelag (13) aus relativ kurzen, 1,3 $\mu$m dicken Kupferlamellen (8) und aus längsseits darüberliegenden, gleichbreiten, relativ langen 1,0 $\mu$m dicken Aluminiumlamellen (9) bestehende Bimetallschuppen (3) enthält, die an mehreren auf einer Glasplatte als Substrat (2) aufgedampften Aluminiumstreifen (11) mit den Kurzseiten der Bimetallschuppen (3) bündig abschneidend mittels Schweißung oder Hartlötung angebracht sind, so daß in Ruhelage der Bimetallschuppen (3) eine im wesentlichen homogene, reflektierende Oberfläche besteht.

6. Verfahren zur Herstellung von Solarenergiekollektoren nach den Ansprüchen 1 bis 5, gekennzeichnet durch folgende Verfahrensschritte:

— Aufdampfen von 0,5 mm breiten, 1,3 $\mu$m dicken, 0,5 mm langen Kupferschichten (8) mit Spielraum, eng zueinander benachbart, in streifenförmiger Anordnung von 0,5 mm Streifenbreite und gegenseitigem lichten Streifenabstand von etwas mehr als 1,5 mm auf eine aus biegsamen Kunststoff bestehende Unterlage (7),

— Aufdampfen von 0,5 mm breiten, 1 μm dicken, 2,0 mm langen Aluminiumschichten (9) mittels Siebmaske, so daß die Aluminiumschichten (9) bei jeweiliger Überbrückung des lichten Streifenabstands jeweils auf zwei Längsseiten und einer Breitseite zur Bildung der jeweils aus den beiden Lamellen (8, 9) bestehenden Bimetallschuppen (3) bündig mit den Kupferschichten (8) abschneidend aufgebracht werden,

— Aufdampfen von 20 μm dicken, 0,2 mm breiten, ersten Aluminiumstreifen (10) senkrecht zur Längserstreckung und oberhalb der Bimetallschuppen (3), so daß die ersten Aluminiumstreifen (10) längsseitenbündig mit den Breitseiten der Bimetallschuppen (3) an ihrem jeweils dickeren Ende abschneiden, sowie eines die Enden der ersten Aluminiumstreifen (10) verbindenden, ersten Querstreifen (12), ebenfalls aus Aluminium,

— Aufdampfen von 20 μm dicken, 0,2 mm breiten, zweiten Aluminiumstreifen (11) auf das Substrat (2) und zwar in gleichem Abstand zueinander wie die ersten Aluminiumstreifen (10) sowie eines die Enden der zweiten Aluminiumstreifen (11) verbindenden zweiten Querstreifens,

— Übereinanderlegen von Kunststoffunterlage (7) und Substrat (2) derart, daß die ersten (10) und zweiten Aluminiumstreifen (11) deckungsgleich unter Isolation von ersten und zweiten Querstreifen zueinander aufeinander zu liegen kommen,

— Anschließen beider Aluminiumstreifengruppen an eine elektrische Stromquelle und schrittweises Anpressen beider Aluminiumstreifen (10, 11), Bimetallschuppenzeile für Bimetallschuppenzeile, vorzugsweise bei Auflage des Substrats (2) auf fester Unterlage und unter Druckvermittlung durch eine über die Kunststoffunterlage (7) in Längsrichtung der Aluminiumstreifen (10, 11) geführte Rolle, so daß sie schrittweise miteinander fest verbunden werden,

— Abtragen der Kunststoffunterlage (7) mittels eines organischen Lösungsmittels.

7. Verfahren zur Herstellung von Solarenergiekollektoren nach den Ansprüchen 1 bis 5, dadurch gekennzeichnet, daß die beiden Aluminiumstreifen (10, 11), die einerseits auf die auf einer Kunststoffunterlage (7) aufgebrachten Bimetallschuppen (3) aufgedampft sind und andererseits auf einem Substrat (2) angeordnet sind, vor Abtragen der Kunstoffunterlage (7) mittels Laserstrahlen miteinander verschweißt werden.

**Revendications**

1. Capteur d'énergie solaire comportant une surface pour capter la lumière constituée d'un réseau de lentilles multiples (1) pour focaliser, à l'aide des lentilles, les rayons du soleil tombant de l'extérieur sur le capteur d'énergie solaire sur des passages de rayonnement (5) dans un revêtement situé dans le plan focal et dont la face arrière réfléchit le rayonnement, de telle sorte que le capteur d'énergie solaire se conduit comme un corps presque noir étant donné que pratiquement tout le rayonnement incident arrive sur l'élément d'absorption, caractérisé en ce que les passages de rayonnement (5) sont uniquement franchissables par l'énergie rendue localement active lors de la focalisation des rayons de soleil (6) incidents, c'est-à-dire dans un revêtement d'écailles (13) dans le plan focal, composé d'écailles bi-métalliques (3) individuelles qui se courbent sous l'influence des rayons focalisés (6).

2. Dispositif selon la revendication 1, caractérisé en ce que les dimensions des écailles bi-métalliques (3) sont choisies de façon que chaque lentille du réseau de lentilles multiples (1) est associés à environ 100 écailles bi-métalliques (3).

3. Dispositif selon la revendication 1 ou 2, caractérisé en ce que le substrat (2) du revêtement en écailles (13) et le réseau de lentilles multiples (1) forment une unité dont l'indice de réfraction est en accord avec le rayon de lentille du réseau de lentilles multiples (1).

4. Dispositif selon la revendication 1 ou 2, caractérisé en ce que l'interstice (14) entre le réseau de lentilles multiples (1) et le substrat (2) est traversée par un milieu de refroidissement perméable au rayonnement dont l'indice de réfraction coïncide au moins à peu près avec celui du substrat (2) et le réseau de lentilles multiples (1).

5. Dispositif selon la revendication 2 our 3, caractérisé en ce que le revêtement en écailles bi-métalliques (13) comporte des écailles bi-métalliques (3) formées par des lamelles de cuivre (8) relativement courtes d'une épaisseur de 1,3 μm et par des lamelles (9) d'aluminium relativement longues d'une épaisseur de 1,0 μm, de même largeur et superposées côte-à-côte auxdites lamelles de cuivre, lesdites écailles étant fixées par soudage ou brasage à plusieurs bandes (11) d'aluminium déposées en phase vapeur sur une plaque de verre comme substrat (2) et étant de niveau avec les côtés courts des écailles bi-métalliques (3), de telle sorte que dans la position de repos des écailles bi-métalliques (3) on obtient une surface réfléchissante essentiellement homogène.

6. Procédé pour fabriquer des capteurs solaires selon les revendications 1 à 5, caractérisé par les étapes de procédé suivantes:

dépôt en phase vapeur de couches de cuivre (8) d'une largeur de 0,5 mm, d'une épaisseur de

1,3 μm et d'une longueur de 0,5 mm, avec tolérance, très prés les unes des autres, disposées en bandes de largeur de 0,5 mm et avec un espacement mu uel d'un peu plus de 1,5 mm, sur un support (7) en matière synthétique souple,

dépôt en phase vapeur, à l'aide de la technique par écran, de couches (9) d'aluminium d'une largeur de 0,5 mm, d'une épaisseur de 1 μm, et d'une longueur de 2,0 mm de telle sorte que les couches (9) d'aluminium, en créant un pont sur l'espacement des bandes, sont déposées chacune de façon à former avec les couches (8) de cuivre des surfaces planes ayant deux côtés longs et un côté large pour former les écailles bi-métalliques (3) composées des deux lamelles (8, 9).

dépôt en phase vapeur de premières bandes d'aluminium (10) d'une épaisseur de 20 μm, d'une largeur de 0,2 mm perpendiculairement à la longueur et au-dessus des écailles bimétalliques (3) de telle sorte que les côtés longs des premières bandes (10) d'aluminium ont des surfaces planes aux côtés larges des écailles bimétalliques (3), à leurs extrémités plus épaisses, et dépôt d'une première bande transversale (12), également en aluminium, reliant les extrémités des premières bandes (10) d'aluminium,

dépôt en phase vapeur sur le substrat (2) des secondes bandes (11) d'aluminium d'une épaisseur de 20 μm et d'une largeur de 0,2 mm, espacées de la même manière que les premières bandes (10) d'aluminium et dépôt d'une seconde bande transversale reliant les extrémités des secondes bandes (11) d'aluminium,

superposition du support en matière synthétique (7) et du substrat (2) de telle sorte que les première (10) et seconde bandes (11) d'aluminium coincident, avec les première et seconde bandes transversales ètant isolées les unes des autres,

connexion des deux groupes de bandes d'aluminium à une alimentation de courant électrique et emboutissage progressif des deux groupes de bandes (10, 11) d'aluminium, rangée d'écailles bi-métallique par rangée d'écailles bi-métaliques, le substrat (2) étant de préférence placé sur un support solide, et la pression étant transmise par un rouleau agissant sur le support en matière synthétique (7) dans la direction longitudinale des bandes (10, 11) d'aluminium de telle sorte que celles-ci soient solidement jointes entre elles au pas,

décapage du support en matière synthétique (7) par un solvant organique.

7. Procédé pour fabriquer des capteurs solaires selon les revendications 1 à 5, caractérisé en ce que les deux bandes d'aluminium (10, 11) déposées d'une part en phase vapeur sur les écailles bi-métalliques (3) disposées sur un support en matière synthétique (7) et d'autre part placées sur un substrat (2) sont soudées ensemble à l'aide d'un faisceau laser avant le décapage du support en matière synthétique (7).

## Claims

1. Solar collector with a light incidence surface (1) formed by a lens array to focus sun beams impinging from outside onto the solar collector, by means of the lenses onto radiation passages (5) in a coating in the focal plane with a radiation-reflecting surface on its back, so that the solar collector acts at least almost as a black body in that practically the entire incident radiation reaches the absorber, characterized in that the radiation passages (5) can be enabled only through energy that is made locally effective upon the focusing of the incident sun beams (6), i.e. in a scale coating (13) that is provided in the focal plane, and composed of individual bimetallic scales (3) bendable when the radiation (6) is focused thereon.

2. Arrangement as claimed in claim 1, characterized in that the dimensions of the bimetallic scales (3) are selected in such a manner that a number in the order of 100 bimetallic scales (3) are associated to each lens in the lens array (1).

3. Arrangement as claimed in claim 1 or 2, characterized in that the substrate (2) of the scale coating (13), and the lens array (1) form an assembly whose refractive index is adapted to the lens radius in the lens array (1).

4. Arrangement as claimed in claim 1 or 2, characterized in that a radiation-transmitting cooling medium whose refractive index almost substantially coincides with that of the substrate (2) and of the lens array (1), flows in a space (14) between lens array (1) and substrate (2).

5. Arrangement as claimed in claim 2 or 3, characterized in that the bimetallic scale coating (13) comprises bimetallic scales (3) consisting of relatively short, 1.3 μm thick copper lamellae (8), and of relatively long 1.0 μm thick aluminum lamellae (9) which are positioned thereon side-by-side, and which are of equal width, these bimetallic scales being connected to several aluminum strips (11) vapor-deposited on a glass plate substrate (2), in alignment with the short sides of the bimetallic scales (3), by means of welding or hard soldering, so that in the stationary position of the bimetallic scales (3) there exists a substantially homogeneous, reflecting surface.

6. Method of making solar collectors as claimed in any one of claims 1 to 5, characterized by the following process steps:

— vapor deposition of copper layers (8) of 0.5 mm width, 1.3 μm thickness, 0.5 mm length, with tolerance, closely adjacent, provided in stripes of 0.5 mm width and mutual spacing of slightly more than 1.5 mm, onto a substrate (7) of flexible synthetic material,

— vapor deposition of aluminum layers (9) of 0.5 mm width, 1 $\mu$m thickness, 2.0 mm length by means of a silk screen so that the aluminum layers (9), with respective bridging of the strip spacing, are applied on two respective longitudinal sides and one broad side to form the bimetallic scales (3) each consisting of the two lamellae (8, 9), flush with the copper layers (8),

— vapor deposition of first aluminum strips (10) of 20 $\mu$m thickness and 0.2 $\mu$m width, perpendicularly to the length and above the bimetallic scales (3), so that the first aluminum strips (10) are flush on the longitudinal side with the broad sides of the bimetallic scales (3) at their respective thick end, and of a first transverse strip (12) also of aluminum which connects the ends of the first aluminum strips (10),

— vapor deposition of second aluminum strips (11) of 20 $\mu$m thickness and 0.2 mm width onto the substrate (2), with the same spacing as the first aluminum strips (10), and of a second transverse strip connecting the ends of the second aluminum strips (11),

— superposition of synthetic substrate (7) and substrate (2) in such a manner that the first (10) and the second aluminum strips (11) are coincident, with the first and second transverse strips being insulated from each other,

— connecting both groups of aluminum strips to an electric current source, and pressing step by step both aluminum strips (10, 11), bimetallic scale row by bimetallic scale row, preferably with the substrate (2) being placed onto a solid basis, and by exerting the pressure through a roller operating over the synthetic substrate (7) in the longitudinal direction of the aluminum strips (10, 11), so that they are firmly connected to each other step by step,

— removing the synthetic substrate (7) by means of an organic solvent.

7. Method of making solar collectors in accordance with any of claims 1 to 5, characterized in that the two aluminum strips (10, 11) which on the one hand are vapor deposited on the bimetallic scale (3) applied on a synthetic substrate (7), and on the other arranged on a substrate (2), are welded to each other by means of laser beams prior to the removal of the synthetic substrate (7).

**0 009 571**

FIG. 1

FIG. 2

FIG. 3

1

FIG. 4

FIG. 5

FIG. 6

FIG. 7

FIG. 8

FIG. 9